# EUROPÄISCHE PATENTSCHRIFT

(11) **EP 0 589 377 B1**
(45) Veröffentlichungstag und Bekanntmachung des Hinweises auf die Patenterteilung: **24.07.1996**
(21) Anmeldenummer: 93115058.5
(22) Anmeldetag: 18.09.1993
(51) Int. Cl.: F02M 37/22, B01D 35/30

(54) **Filter zum Reinigen von Kraftstoff**
Fuel filter
Filtre à carburant

(30) Priorität: 24.09.1992 DE 4231999
(43) Veröffentlichungstag der Anmeldung: 30.03.1994
(73) Patentinhaber: ROBERT BOSCH GMBH, 70442 Stuttgart (DE)
(72) Erfinder: Lucas, Bernhard, Dipl.-Ing., E-28034 Madrid (ES); Projahn, Ulrich, Dr. Dipl.-Ing., E-28109 Alcobendas Madrid (ES)

(56) Entgegenhaltungen:
- WO-A-92/20425
- AT-A- 226 483
- US-A- 2 287 344
- US-A- 3 608 726
- US-A- 4 502 956
- US-A- 5 036 822

## Beschreibung

### Stand der Technik

Die Erfindung geht aus von einem Filter zum Reinigen von Kraftstoff nach der im Oberbegriff des Hauptanspruchs näher angegebenen Gattung.

Es ist schon ein solches Filter zum Reinigen von Kraftstoff aus der US-PS 4 502 956 bekannt, an dessen Filterdeckel ein Filtergehäuse leicht lösbar mittels Überwurfmutter angeschraubt ist. Das Filter ist hier als sogenanntes Gehäusefilter mit austauschbaren Filtereinsätzen ausgebildet, wobei am Filterdeckel stets drei Dichtstellen liegen, von denen zwei im Hinblick auf die Einstecklösung axial verschiebbar sind, während die dritte Abdichtung axial festliegt. Von Nachteil bei diesem Filter ist der hohe Aufwand für diese Gehäusefilterbauart, das als mehrstufiges Filter ausgebildet ist, bei dem mehrere Filtereinsätze hintereinander geschaltet sind. Der Filterdeckel ist speziell auf diese Bauart ausgerüstet und eignet sich nicht zum Anbau eines anderen Filtergehäuses. Der Filterdeckel selbst ist daher nicht universell verwendbar. Zudem erfolgt die Abdichtung an der mittleren und äußeren Dichtstelle in ungünstiger Weise an relativ großen Außendurchmessern. Auch die Handpumpe am Filterdeckel ist fest montiert, so daß sich der Filterdeckel nicht für eine Modulbauweise eignet.

Ferner ist aus der US-PS 4 117 817 ein Kraftstoff-Filter in einer Bauart als einfach handhabbare Einstecklösung bekannt, bei dem das Filtergehäuse mittels Überwurfmutter am Filterdeckel festgeschraubt wird. Für den austauschbaren Filtereinsatz in radial durchströmter Sternbauart werden nur zwei Dichtstellen benötigt. Von Nachteil bei diesem Filter ist, daß es sich nur für diese spezielle Gehäusefilterbauart mit austauschbarem Sterneinsatz eignet. Der Anbau eines anderen Filtergehäuses am Filterdeckel ist nicht vorgesehen. Auch hier wird eine Abdichtung in ungünstiger Weise am relativ großen Außendurchmesser vorgenommen. Zudem baut der Filterdeckel sehr aufwendig, vor allem im Bezug auf Material- und Platzbedarf.

### Vorteile der Erfindung

Das erfindungsgemäße Filter für Kraftstoff mit den kennzeichnenden Merkmalen des Hauptanspruchs hat demgegenüber den Vorteil, daß es eine einfach handhabbare Einstecklösung mit günstiger Abdichtung zwischen Schmutzseite und Reinseite und leichter Befestigung durch eine Überwurfmutter erlaubt, wobei unterschiedliche Filtergehäuse am Filterdeckel anbaubar sind. Der Filterdeckel kann auf diese Weise ohne Änderungen für verschiedene Filtervarianten verwendet werden, wobei er sich einmal vor allem für ein Gehäusefilter mit austauschbarem Filtereinsatz und zum anderen für eine wegwerfbare Wechselbox eignet. Der Filterdeckel baut dabei relativ einfach und kompakt und eignet sich zur Integration zusätzlicher Funktionen.

Durch die in den Unteransprüchen aufgeführten Maßnahmen sind vorteilhafte Weiterbildungen und Verbesserungen des im Anspruch 1 angegebenen Filters möglich. Bei einer Ausbildung des Filters nach Anspruch 2 bzw. 3 läßt sich eine einfache, kostengünstige und sichere Bauweise erreichen. Vorteilhaft ist es ferner, wenn die Abdichtung nach Anspruch 4 ausgebildet wird, wodurch sie auf einem relativ kleinen Durchmesser erfolgt. Zweckmäßig ist es, wenn der Filterdeckel gemäß Anspruch 5 ausgeführt wird, so daß er im wesentlichen eine platzsparende, scheibenförmige Form aufweist. Weiterhin ist es günstig, wenn gemäß Anspruch 6 die Anschlußbohrungen so ausgebildet werden, daß sie sich für handelsübliche Schnellanschluß-Steckverbindungen eignen, so daß aufwendige Gewindebohrungen entfallen können. Vorteilhaft ist es ferner, wenn beim Filter nach Anspruch 7 der Filterdeckel in Modulbauweise ausgeführt wird, so daß auch andere Modulbausteine, wie zum Beispiel ein Heizungsmodul, ein Kraftstoff-Rückführungsmodul oder ein Handpumpenmodul anbaubar sind. Eine besonders zweckmäßige Ausbildung ergibt sich gemäß Anspruch 8, wenn im Filtergehäuse der Filtereinsatz austauschbar angeordnet wird, so daß das Filtergehäuse selbst wiederverwendbar ist. Weiterhin ist es günstig, wenn das Filtergehäuse als Teil einer wegwerfbaren Wechselbox ausgebildet wird, so daß in kostengünstiger Weise mit nur einem Filterdeckel unterschiedliche Kundenwünsche erfüllbar sind. Weitere vorteilhafte Ausgestaltungen ergeben sich aus den übrigen Ansprüchen, der Beschreibung sowie der Zeichnung.

### Zeichnung

Zwei Ausführungsbeispiele der Erfindung sind in der Zeichnung dargestellt und in der nachfolgenden Beschreibung näher erläutert. Es zeigen Figur 1 einen Längs schnitt durch ein erstes Filter zum Reinigen von Kraftstoff mit einem angebauten Gehäusefilter, teilweise im Schnitt, sowie Figur 2 einen Längsschnitt durch ein zweites Filter, bei dem am gleichen Filterdeckel eine wegwerfbare Wechselbox angebaut ist, Figur 3 eine geänderte Einspannung der Bördelung der Wechselbox durch die Überwurfmutter und Figur 4 eine geänderte Bauform einer Manschettendichtung.

### Beschreibung der Ausführungsbeispiele

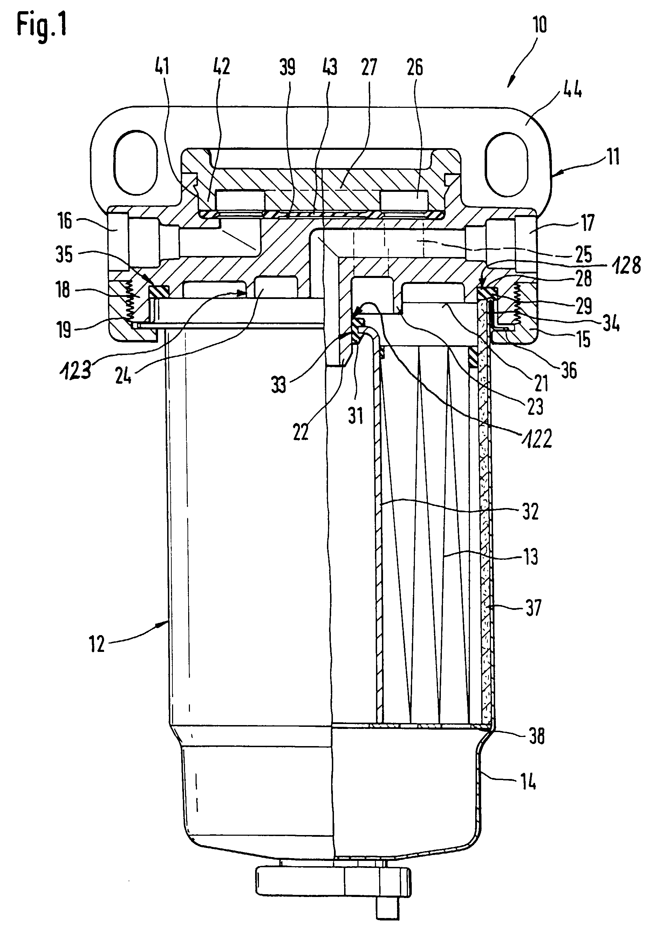

Die Figur 1 zeigt einen Längsschnitt durch ein Filter 10, wie es zum Reinigen von Kraftstoff verwendet wird. Das Filter 10 besteht im wesentlichen aus einem Filterdeckel 11 und einem sogenannten Gehäusefilter 12 mit austauschbarem Filtereinsatz 13, wobei das eigentliche Filtergehäuse 14 mit Hilfe einer Überwurfmutter 15 am Filterdeckel 11 lösbar befestigt ist.

Der Filterdeckel 11 weist im wesentlichen die Grundform einer flachen, kreisförmigen Scheibe auf, bei dem in der gleichen radialen Ebene und diametral zueinander versetzt die Anschlüsse für Zulauf 16 und Ablauf 17 angeordnet sind. Der Filterdeckel 11 kann aus glasfaserverstärktem Kunststoff oder als Aluminium-Druckgußteil hergestellt werden und weist einen von den Anschlüssen 16, 17 nach unten ragenden Bund 18 mit Außengewinde 19 auf, auf das die im Querschnitt L-förmige Überwurfmutter 15 aufgeschraubt ist. Auf der dem Bund 18 zugeordneten Stirnseite 21 des Filterdeckels 11 ist ein zentral angeordneter, axial verlaufender erster Rohrstutzen 22 angeordnet, der mit dem Ablauf-Anschluß 17 in Druckmittelverbindung steht. Konzentrisch zum ersten Rohrstutzen 22 ist an der Stirnseite 21 ein zweiter Rohrstutzen 23 ausgebildet, dessen axiale Länge etwa halb so groß ist wie diejenige des ersten Rohrstutzens 22. Ein zwischen den beiden Rohrstutzen 22, 23 ausgebildeter Ringraum 24 steht über eine Querverbindung 25 im Filterdeckel 11 mit einem Querkanal 26 in einer Abschlußkappe 27 und mit dem Zulauf-Anschluß 16 in Verbindung. Ferner ist an der Stirnseite 21 des Filterdeckels 11 neben dem Bund 18 eine Ringnut 28 ausgebildet, in die ein Flachdichtring 29 eingelegt ist.

Der Filterdeckel 11 ist auf diese Weise an seiner Stirnseite 21 so ausgebildet, daß an ihm drei Dichtstellen 122,123,128, möglich sind. Dabei bildet der erste Rohrstutzen 22 eine sog. innere Dichtstelle 122, während der zweite Rohrstutzen 23 einer mittleren Dichtstelle 123 zugeordnet ist und schließlich die Ringnut 28 eine äußere Dichtstelle 128 bildet. Von diesen drei Dichtstellen 122,123,128 werden durch das angebaute Gehäusefilter 12 lediglich zwei Dichtstellen als Abdichtungen benutzt. Am ersten Rohrstutzen 22 liegt eine Dichtmanschette 31 axial verschiebbar an, welche auf einem Stützrohr 32 des Filtereinsatzes 13 befestigt ist. Dichtmanschette 31 und Rohrstutzen 22 bilden auf diese Weise eine erste, innere Abdichtung 33, welche Schmutz- und Reinseite im Filter voneinander trennen. Ferner drückt ein umgebogener Rand 34 des Filtergehäuses 14 gegen den Flachdichtring 29 und bildet dabei eine zweite, äußere Abdichtung 35, welche das Innere des Filtergehäuses 14 nach außen hin abdichtet. Der Rand 34 des Filtergehäuses 14 weist dabei einen radial nach außen ragenden Kragen 36 auf, mit dem er sich an der Überwurfmutter 15 abstützt. Am Filterdeckel 11 sind somit in platzsparender Weise alle drei Dichtstellen 122,123,128 in der gleichen radialen Ebene wie die Überwurfmutter 15 angeordnet.

Der Filtereinsatz 13 ist hier als axial durchströmter Wickel ausgebildet, der in an sich bekannter Weise zwischen dem Stützrohr 32 und einem außen liegenden Papprohr 37 angeordnet ist. Das Papprohr 37 stützt sich einerseits an einem Lochblech 38 und andererseits am Flachdichtring 29 ab, so daß der Filtereinsatz 13 axial im Filtergehäuse 14 festgelegt ist.

Der Filterdeckel 11 weist auf seiner der Stirnseite 21 entgegengesetzt liegenden Stirnseite 39 einen Buchsenanschluß 41 auf, in den die Abschlußkappe 27 mit ihrem Steckeranschluß 42 eingesetzt ist. Anstelle der in Modulbauweise ausgebildeten Abschlußkappe 27 können somit in den Filterdeckel 11 auch andere Modulbausteine eingesetzt werden, die zum Beispiel die Funktion einer Handpumpe, einer elektrischen Heizung oder einer Kraftstoffrückführung übernehmen können. Die Abdichtung zwischen dem Filterdeckel 11 und der Abschlußkappe 27 übernimmt ein Flachdichtelement 43. Ferner ist am Filterdeckel 11 ein Befestigungsflansch 44 angeordnet.

Im Filterdeckel 11 sind die Anschlüsse für Zulauf 16 und Ablauf 17 mit solchen abgestuften Anschlußbohrungen ausgeführt, daß handelsübliche Schnellschluß-Steckverbindungen verwendet werden können, um eine kostengünstige und schnelle Anbindung der Kraftstoff-Rohrleitungen zu ermöglichen.

Die Wirkungsweise des Filters 10 ist im wesentlichen bekannt und wird deshalb nur kurz erläutert. Der zu reinigende Kraftstoff fließt vom Zulauf-Anschluß 16 in die Abschlußkappe 27 und gelangt über deren Querkanal 26 sowie die Querverbindung 25 im Filterdeckel 11 in den Ringraum 24 zwischen den beiden Rohrstutzen 22, 23 und somit auf die Schmutzseite des Gehäusefilters 12. Der Kraftstoff durchströmt axial nach unten das Wickelelement 13 um dann anschließend gereinigt zentral über das Stützrohr 32 und den ersten Rohrstutzen 22 zum Ablaufanschluß 17 zu gelangen. Die erste Abdichtung 33 sorgt hierbei für eine Trennung von Schmutzseite und Reinseite, während die zweite Abdichtung 35 nach außen hin abdichtet.

Das Filter 10 ist als einfach handhabbare Einstecklösung ausgebildet, wobei das Gehäusefilter 12 mit Hilfe der Überwurfmutter 15 leicht lösbar am Filterdeckel 11 befestigbar ist. Die Überwurfmutter 15 preßt dabei über den radial ausgebogenen Kragen 36 den Rand 34 des Filtergehäuses 14 fest gegen den Flachdichtring 29; die erste Abdichtung 33 bleibt dabei axial verschiebbar. Die Dichtmanschette 31 wird dabei zweckmäßig als Gummidichtung ausgebildet. Bei verstopftem Filtereinsatz 13 kann durch Lösen der Überwurfmutter 15 das Gehäusefilter 12 vom Filterdeckel 11 entfernt werden und anschließend der Filtereinsatz 13 entsorgt werden. Das Filtergehäuse 14 bleibt daher in kostengünstiger Weise weiter verwendbar.

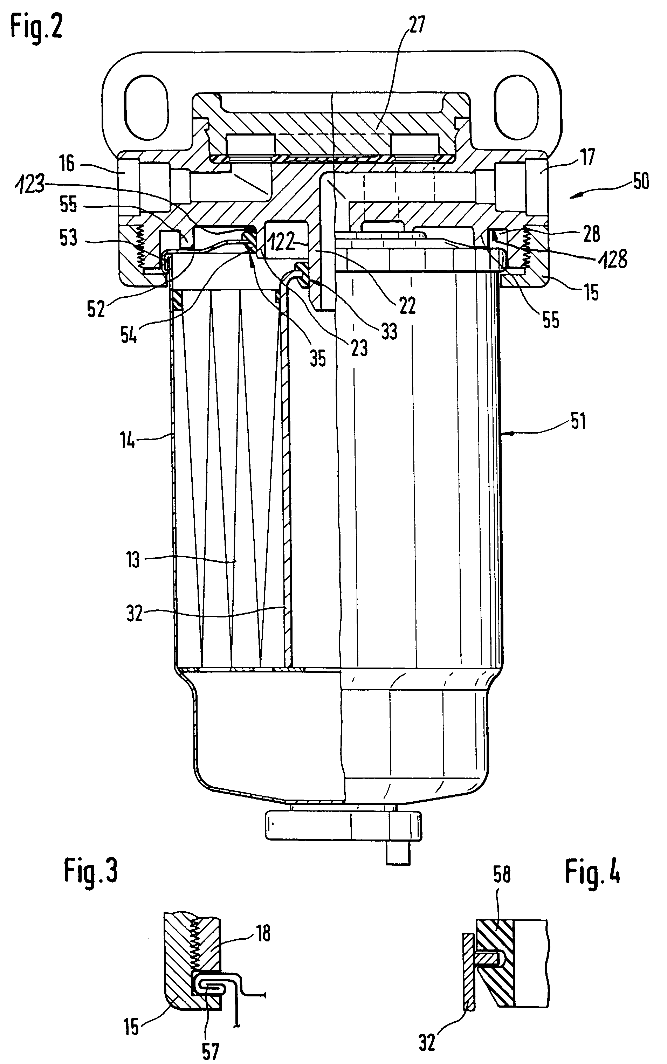

Die Figur 2 zeigt einen Längsschnitt durch ein zweites Filter 50, das sich von dem Filter 10 nach Figur 1 wie folgt unterscheidet, wobei für gleiche Bauelemente gleiche Bezugszeichen verwendet werden.

Beim Filter 50 wird derselbe Filterdeckel 11 wie beim Filter 10 verwendet, wobei jedoch an seine Stirnseite 21 eine wegwerfbare Wechselbox 51 angebaut ist. Die Wechselbox 51 weist in ihrem Filtergehäuse 14 den gleichen Filtereinsatz 13 mit Stützrohr 32 auf, bei dem jedoch das äußere Papprohr 37 entfällt. Das Gehäuse 14 ist an seinem oberen Rand durch einen metallischen Verschlußdeckel 52 abgesperrt, der einerseits in einem Bördelrand 53 dicht und fest mit dem Gehäuse 14 verbunden ist, während er an seinem inneren Rand eine Dichtmanschette 54 aufweist. Die Dichtmanschette 54, die zweckmäßig als Gummidichtung ausgebildet ist, bildet zusammen mit der mittleren Dichtstelle 123 am zweiten Rohrstutzen 23 die sog. äußere Abdichtung 35, welche den Innenraum der Wechselbox 51 nach außen hin abdichtet. Dabei ist es besonders vorteilhaft, daß die äußere Abdichtung 35 auf einem gegenüber der äußeren Dichtstelle 128 wesentlich kleinerem Durchmesser liegt; dadurch werden nicht nur die von der Überwurfmutter 15 zu übertragenden Kräfte gesenkt, sondern durch die kürzere Dichtlänge werden der Bauaufwand verringert und die Sicherheit erhöht. Bei der Wechselbox 51 wird der verstärkte Bördelrand 53 als Spannstelle benutzt, an dem das Filtergehäuse 14 mit Hilfe der Überwurfmutter 15 gegen den Filterdeckel 11 gedrückt wird. Dabei stützt sich der Verschlußdeckel 52 in axialer Richtung an einem ringförmig verlaufenden Steg 55 ab, welcher die Ringnut 28 begrenzt. Die Wechselbox 51 ist auf diese Weise axial festgelegt, während die beiden Abdichtstellen 33 und 35 auf dem Rohrstutzen 22 bzw. 23 axial verschiebbar angeordnet sind. Die Wechselbox 51 läßt sich in einfacher und schneller Weise am Filterdeckel 11 axial einstecken und mit der Überwurfmutter 15 befestigen, wobei am Filterdeckel 11 selbst keine nennenswerten Änderungen vorgenommen werden müssen. Der Flachdichtring 29 in der Ringnut 28 kann dabei eingespart werden.

Bei vorliegenden Filtern 10, 50 kann somit ein und derselbe Filterdeckel 11 für unterschiedliche Filtervarianten verwendet werden, wobei eine einfach handhabbare Einstecklösung mit Befestigung durch Überwurfmutter erhalten bleibt. Außerdem lassen sich im Filterdeckel 11 Kraftstoffleitungen einfach und schnell montieren und es können mit Hilfe der Modulbauweise zusätzliche Funktionen am Filterdeckel 11 integriert werden.

Selbstverständlich sind an den gezeigten Ausführungsformen Änderungen möglich, ohne vom Gedanken der Erfindung abzuweichen. So kann bei dem Gehäusefilter und bei der Wechselbox anstelle des gezeigten Wickeleinsatzes auch ein Filterelement in Sternbauweise verwendet werden. Ferner zeigt die Figur 3 als Einzelheit eine Variante bei einer Wechselbox, bei welcher der Bördelrand 57 in einer radialen Richtung ausgebildet ist, so daß er zwischen der Überwurfmutter 15 und dem Bund 18 eingespannt werden kann. Ferner zeigt die Figur 4 als Einzelheit eine Variante, bei der am Stützrohr 32 eine andere Dichtmanschette 58 aus Gummi eingesetzt wird.

## Patentansprüche

1. Filter (10, 50) zum Reinigen von Kraftstoff, mit einem die Anschlüsse für Zulauf (16) und Ablauf (17) aufweisenden Filterdeckel (11), an dem mit Hilfe einer Überwurfmutter (15) ein Filtergehäuse (14) lösbar befestigt ist, wobei die Überwurfmutter (15) das einen Filtereinsatz (13) aufnehmende Filtergehäuse (14) an seinem Umfang umgreift, und bei dem am Filterdeckel (11) Dichtstellen (122, 123, 128) für die Abdichtungen vorgesehen sind, von denen eine innere Dichtstelle (122) zwischen Schmutz- und Reinseite liegt und einen für ein axiales Aufstecken des Filtergehäuses (14) auf den Filterdeckel (11) geeigneten, zentrischen Rohrstutzen (22) am Filterdeckel (11) aufweist, eine mittlere Dichtstelle (123) am Filterdeckel (11) zwischen der inneren und äußeren Dichtstelle (122, 128) liegt und die äußere Dichtstelle (128) den Innenraum des Filtergehäuses (14) nach außen hin abdichtet, wobei am Filterdeckel (11) alle drei Dichtstellen (122, 123, 128) in der gleichen radialen Ebene wie die Überwurfmutter (15) liegen, dadurch gekennzeichnet, daß die mittlere Dichtstelle (123) am Filterdeckel (11) als rohrförmiger Stutzen (23) ausgebildet ist, der konzentrisch zum zentralen Rohrstutzen (22) liegt, daß der Ringraum (24) zwischen beiden Rohrstutzen (22, 23) mit dem Zulauf-Anschluß (16) und der zentrale Rohrstutzen (22) mit dem AblaufAnschluß (17) fluidisch verbunden sind, daß von den drei Dichtstellen (122, 123, 128) nur jeweils zwei als Abdichtungen (33, 35) ausgebildet sind, wobei die den Innenraum des Filtergehäuses (14) nach außen absperrende Abdichtung (35) durch austauschbare Filtergehäuse (14, 51) wahlweise an die äußere Dichtstelle (128) oder die mittlere Dichtstelle (123) verlegbar ausgebildet ist.

2. Filter nach Anspruch 1, dadurch gekennzeichnet, daß die Abdichtungen (33, 35) an der inneren und der mittleren Dichtstelle (122, 123) mit axial auf dem Rohrstutzen (22, 23) verschiebbaren Dichtmanschetten (31, 54) ausgebildet sind, die insbesondere aus Gummi bestehen.

3. Filter nach Anspruch 1 oder 2, dadurch gekennzeichnet, daß die äußere Dichtstelle (128) im Filterdeckel (11) eine zum Filtergehäuse (14) hin offene Ringnut (28) aufweist, in die ein Flachdichtring (29) einlegbar ist.

4. Filter nach einem der Ansprüche 1 bis 3, dadurch gekennzeichnet, daß der Abstand der mittleren Dichtstelle (123) von der inneren Dichtstelle (122) kleiner ist als deren Abstand von der äußeren Dichtstelle (128).

5. Filter nach einem der Ansprüche 1 bis 4, dadurch gekennzeichnet, daß die Anschlüsse für Zulauf (16) und Ablauf (17) in der gleichen radialen Ebene liegen und insbesondere koaxial zueinander angeordnet sind.

6. Filter nach Anspruch 5, dadurch gekennzeichnet, daß die Anschlußbohrungen für den Zulauf (16) und den Ablauf (17) für Schnellanschluß-Steckverbindungen ausgebildet sind.

7. Filter nach einem oder mehreren der Ansprüche 1 bis 6, dadurch gekennzeichnet, daß am Filterdeckel (11) auf der zum Filtergehäuse (14) entgegengesetzt liegenden Stirnseite (39) eine in Modulbauweise ausgebildete Abschlußkappe (27) angeordnet ist, die einen Kanal (26) aufweist, über welchen der Kraftstoff vom Zulaufanschluß (16) zum Ringraum (24) zwischen beiden Rohrstutzen (22, 23) geführt wird.

8. Filter nach einem oder mehreren der Ansprüche 1 bis 7, dadurch gekennzeichnet, daß das Filtergehäuse (14) als Teil eines Gehäusefilters (12) ausgebildet ist, das einen austauschbaren Filtereinsatz (13) aufweist und dessen Abdichtungen (33, 35) an der inneren (122) und der äußeren Dichtstelle (128) liegen.

9. Filter nach Anspruch 8, dadurch gekennzeichnet, daß das Filtergehäuse (14) eine der inneren Abdichtung (33) zugeordnete, axial verschiebbare Dichtmanschette (31), insbesondere Gummidichtung, aufweist und sein am Außendurchmesser liegender Rand (34) axial auf den Flachdichtring (29) gepreßt wird, wozu insbesondere am Rand (34) ein radial nach außen ragender Kragen (36) ausgebildet ist, der an der Überwurfmutter (15) anliegt.

10. Filter nach einem oder mehreren der Ansprüche 1 bis 7, dadurch gekennzeichnet, daß das Filtergehäuse (14) als Teil einer wegwerfbaren Wechselbox (51) ausgebildet ist, deren Bördelrand (53) am Außendurchmesser eines Verschlußdeckels (52) als Spannstelle für die Überwurfmutter (15) dient, während der Innenrand des Verschlußdeckels (52) eine axial auf dem zweiten Rohrstutzen (23) verschiebbare Dichtmanschette (54) trägt und damit die äußere Abdichtung (35) an der mittleren Dichtstelle (123) bildet und daß der Verschlußdeckel (52) axial auf einem Steg (55) an dem Filterdeckel (11) abgestützt ist und daß die innere Abdichtung (33) von einer Dichtmanschette (31) an einem Stützrohr (32) des Filtereinsatzes (13) gebildet wird, die am zentralen Rohrstutzen (22) anliegt.

11. Filter nach Anspruch 10, dadurch gekennzeichnet, daß der Bördelrand (57) am Filtergehäuse (14) in radialer Richtung ausgebildet ist und axial zwischen Überwurfmutter (15) und Filterdeckel (11) eingespannt ist.

## Claims

1. Filter (10, 50) for cleaning fuel, with a filter cover (11) which has the ports for inflow (16) and outflow (17) and to which a filter housing (14) is fastened releasably with the aid of a union nut (15), the union nut (15) surrounding the filter housing (14) at its circumference, the said filter housing accommodating a filter insert (13), and in which sealing locations (122, 123, 128) for the seals are provided on the filter cover (11), and of these sealing locations an inner sealing location (122) lies between the dirty side and the clean side and has a centric stub tube (22) which is located on the filter cover (11) and allows the filter housing (14) to be pushed axially onto the filter cover (11), a central sealing location (123) is situated on the filter cover (11) between the inner and the outer sealing locations (122, 128), and the outer sealing location (128) seals off the interior of the filter housing (14) from the outside, all three sealing locations (122, 123, 128) being situated in the same radial plane on the filter cover (11) as the union nut (15), characterized in that the central sealing location (123) on the filter cover (11) is designed as a tubular stub (23) which is concentric with the central stub tube (22), in that the annular space (24) between both stub tubes (22, 23) is connected fluidically to the inflow port (16) and the central stub tube (22) is connected fluidically to the outflow port (17), in that of the three sealing locations (122, 123, 128) only two in each case are designed as seals (33, 35), the seal (35) which shuts off the interior of the filter housing (14) from the outside being designed such that, by virtue of exchangeable filter housings (14, 51) it can be relocated either to the outer sealing location (128) or to the central sealing location (123).

2. Filter according to Claim 1, characterized in that the seals (33, 35) at the inner and the central sealing locations (122, 123) are formed by sealing sleeves (31, 54) which can be displaced axially on the stub tube (22, 23) and are composed, in particular, of rubber.

3. Filter according to Claim 1 or 2, characterized in that the outer sealing location (128) has in the filter cover (11) an annular groove (28) which is open towards the filter housing (14) and into which a flat packing ring (29) can be inserted.

4. Filter according to one of Claims 1 to 3, characterized in that the distance of the central sealing location (123) from the inner sealing location (122) is smaller than its distance from the outer sealing location (128).

5. Filter according to one of Claims 1 to 4, characterized in that the ports for inflow (16) and outflow (17) lie in the same radial plane and are, in particular, arranged coaxially with one another.

6. Filter according to Claim 5, characterized in that the port bores for the inflow (16) and the outflow (17) are designed for quick-connection plug-in connectors.

7. Filter according to one or more of Claims 1 to 6, characterized in that the filter cover (11) has arranged on it, on the side (39) lying opposite the filter housing (14), an end (27) of modular design which has a passage (26) via which the fuel is passed from the inflow port (16) to the annular space (24) between both stub tubes (22, 23).

8. Filter according to one or more of Claims 1 to 7, characterized in that the filter housing (14) is designed as part of a housing-type filter (12), which has a replaceable filter insert (13) and the seals (33, 35) of which are situated at the inner sealing location (122) and the outer sealing location (128).

9. Filter according to Claim 8, characterized in that the filter housing (14) has an axially displaceable sealing sleeve (31), in particular a rubber seal, which is assigned to the inner seal (33), and its rim (34) situated at the outside diameter is pressed axially on to the flat packing rim (29), for which purpose a radially outward-projecting collar (36) which rests against the union nut (15) is formed on the rim (34), in particular.

10. Filter according to one or more of Claims 1 to 7, characterized in that the filter housing (14) is designed as part of a disposable easy-change box (51), the beaded rim (53) of which serves, at the outside diameter of a sealing cover (52), as a clamping location for the union nut (15), while the inner rim of the closure cover (52) carries a sealing sleeve (54) which can be displaced axially on the second stub tube (23) and hence forms the outer seal (35) at the central sealing location (123), and in that the sealing cover (52) is supported axially on a web (55) on the filter cover (11), and in that the inner seal (33) is formed by a sealing sleeve (31) on a supporting tube (32) of the filter insert (13), the said sealing sleeve resting on the central stub tube (22).

11. Filter according to Claim 10, characterized in that the beaded rim (57) on the filter housing (14) is formed in the radial direction and is clamped axially between the union nut (15) and the filter cover (11).

## Revendications

1. Filtre (10, 50) servant à nettoyer du carburant, avec un couvercle de filtre (11) présentant les raccordements pour l'arrivée (16) et le départ (17), couvercle sur lequel un boîtier de filtre (14) est fixé de façon amovible à l'aide d'un écrou d'accouplement (15), l'écrou d'accouplement (15) entourant, en le serrant sur son pourtour, le boîtier de filtre (14) qui reçoit une cartouche filtrante (13), et dans le cas duquel sont prévues sur le couvercle de filtre (11) des zones d'étanchéité (122, 123, 128) pour les joints d'étanchéité, zones d'étanchéité parmi lesquelles une zone d'étanchéité intérieure (122) se trouve entre le côté sale et le côté propre et présente, sur le couvercle de filtre (11) un ajutage tubulaire central qui convient pour un enfoncement axial du boîtier de filtre (14) sur le couvercle de filtre (11), une zone d'étanchéité médiane (123) sur le couvercle de filtre (11), entre les zones d'étanchéité intérieure et extérieure (122, 128) et la zone d'étanchéité extérieure (128), assure l'étanchéité de la chambre interne du boîtier de filtre (14) vers l'extérieur, les trois zones d'étanchéité (122, 123, 128) se trouvant dans le même plan radial que l'écrou d'accouplement (15) sur le couvercle de filtre (11), filtre caractérisé en ce que la zone d'étanchéité médiane (123) est constitué sur le couvercle de filtre (11) sous la forme d'un ajutage de forme tubulaire (23), en ce que la chambre annulaire (24) comprise entre les deux ajutages tubulaires (22, 23) est reliée au raccord d'arrivée (16) et l'ajutage central tubulaire (22) est relié de façon fluide au raccord de sortie (17), en ce que, parmi les trois zones d'étanchéité (122, 123, 128), deux seulement sont constituées comme des joints d'étanchéité (33, 35), le joint d'étanchéité (35) qui obture la chambre interne du boîtier de filtre (14) vers l'extérieur, étant constitué de façon déplaçable au choix sur la zone extérieure d'étanchéité (128) ou sur la zone médiane d'étanchéité (123), par le boîtier de filtre interchangeable (14, 51).

2. Filtre selon la revendication 1, caractérisé en ce que les joints d'étanchéité (33, 35) sont constitués sur la zone d'étanchéité intérieure et la zone d'étanchéité moyenne (122, 123) avec des manchettes d'étanchéité (31, 54) pouvant coulisser axialement sur l'ajutage tubulaire (22, 23), manchettes qui sont en particulier en caoutchouc.

3. Filtre selon la revendication 1 ou 2, caractérisé en ce que la zone d'étanchéité extérieure (128) du couvercle de filtre (11) présente une rainure annulaire (28) ouverte en direction du boîtier de filtre (14), rainure dans laquelle peut être insérée une bague d'étanchéité plate (29).

4. Filtre selon l'une des revendications 1 à 3, caractérisé en ce que la distance de la zone d'étanchéité médiane (123) par rapport à la zone d'étanchéité intérieure (122) est plus petite que sa distance par rapport à la zone d'étanchéité extérieure (128).

5. Filtre selon l'une des revendications 1 à 4, caractérisé en ce que les raccords pour l'arrivée (16) et le départ (17) sont disposés dans le même plan radial et sont en particulier coaxiaux l'un par rapport à l'autre.

6. Filtre selon la revendication 5, caractérisé en ce que les alésages de raccordement pour l'arrivée (16) et le départ (17) sont constitués pour des liaisons à enfichage à raccordement rapide.

7. Filtre selon l'une ou plusieurs des revendications 1 à 6, caractérisé en ce que, sur le couvercle de filtre (11), on dispose sur la face frontale (39) qui se trouve à l'opposé du boîtier de filtre (14), un chapeau de fermeture (27) constitué selon un mode de construction modulaire, chapeau de fermeture qui présente un canal (26) par lequel on fait passer le carburant du raccord d'arrivée (16) à la chambre annulaire (24) entre les deux ajutages tubulaires (22, 23).

8. Filtre selon l'une ou plusieurs des revendications 1 à 7, caractérisé en ce que le boîtier de filtre (14) est constitué sous la forme d'un filtre à boîtier (12) qui présente une cartouche filtrante interchangeable (13) et dont les joints d'étanchéité (33, 35) reposent sur la zone d'étanchéité intérieure (122) et la zone d'étanchéité extérieure (128).

9. Filtre selon la revendication 8, caractérisé en ce que le boîtier de filtre (14) présente une manchette d'étanchéité (31), associée au joint d'étanchéité intérieur (33) en particulier un joint d'étanchéité en caoutchouc qui peut coulisser axialement tandis que son bord, se trouvant sur le diamètre extérieur (34), est pressé axialement sur la bague d'étanchéité plate (29), un col (36) faisant saillie radialement vers l'extérieur, étant constitué pour cela, col qui repose sur l'écrou d'accouplement (15).

10. Filtre selon l'une ou plusieurs des revendications 1 à 7, caractérisé en ce que le boîtier de filtre (14) est constitué comme une partie d'une boîte interchangeable jetable (51) dont le bord de repliement (53) sert, sur le diamètre extérieur d'un couvercle de fermeture (52), de zone de serrage pour l'écrou d'accouplement (15), tandis que la paroi intérieure du couvercle de fermeture (52) porte une manchette d'étanchéité (54) qui peut coulisser axialement sur le second ajutage tubulaire (23) et forme de cette façon le joint d'étanchéité extérieur (35) sur la zone d'étanchéité médiane (123), en ce que le couvercle de fermeture (52) prend appui axialement sur une entretoise (55) du couvercle de filtre (11), et en ce que le joint d'étanchéité intérieur (33) est formé par une manchette d'étanchéité (31) sur un tuyau d'appui (32) de la cartouche de filtre (13), qui repose sur l'ajutage tubulaire central (22).

11. Filtre selon la revendication 10, caractérisé en ce que le bord replié (57) du boîtier de filtre (14) est constitué dans le sens radial et est inséré axialement entre l'écrou d'accouplement (15) et le couvercle de filtre (11).
